# EUROPEAN PATENT APPLICATION

(11) **EP 2 724 613 A1**
(43) Date of publication of application: **30.04.2014**
(21) Application number: 13189681.3
(22) Date of filing: 22.10.2013
(51) Int. Cl.: A01K 5/02, A01K 9/00, A01K 11/00

(54) **Automatic feeder**

(30) Priority: 23.10.2012 FI 20126095
(71) Applicant: Finnlacto Oy, 60100 Seinäjoki (FI)
(72) Inventor: Niemi, Pasi, 60100 Seinäjoki (FI)
(74) Representative: Kolster Oy Ab

(57) **Abstract**

A method and arrangement for feeding the young of domesticated animals with a feeding device arrangement (1), in which the animals coming to drink are identified, fed according to predefined principles and finally deleted from the system, if they have not visited the feeding device (2, 2a, 2b) within a predetermined time. The operation of the arrangement is controlled with a control unit (5) without any user input.

## Description

### Background

The invention relates to automatic feeders of domesticated animals.

Today, there are various alternatives to feeding domesticated animals, especially cattle. For instance, calves are generally fed by what is known as free-choice feeding, in which the amounts of the calves' drink are not in any way restricted, and on the other hand, bucket / nipple bucket feeding is also used. Bucket / nipple bucket feeding requires considerably more work than free feeding, but, on the other hand, free-choice feeding also carries the risk of excessive drinking especially if the acidity of the drink is not controlled, and this also affect the costs through the high price of milk replacer, for example. To solve these problems, various automatic feeders have been developed, but these automatic feeders may be expensive to use in small and medium-sized milk farms, in which there usually is a limited amount of calves at a time, and learning to use the feeders may be arduous and require time.

### Brief description

It is, thus, the object of the present solution to develop a new method and an apparatus implementing the method for feeding domesticated animals. The object of the invention is achieved by a method and system which are characterised by what is disclosed in the independent claims. Preferred embodiments of the invention are disclosed in the dependent claims.

The present solution is based on controlling the feeding, or more precisely drinking, of animals are controlled automatically by a feeding device on the basis of predetermined parameters.

An advantage of the method and system according to the present solution is that an animal can be fed and it can be weaned by an automatic control that is simple, inexpensive and very easy to use.

### Brief description of the figures

The invention will now be described in more detail in connection with preferred embodiments and with reference to the accompanying drawings, in which:
Figure 1 is a schematic view of a feeding device arrangement;
Figure 2 is a schematic view of a second feeding device arrangement;
Figure 3 is a schematic view of a third feeding device arrangement;
Figure 4 is a schematic view of a predetermined feeding curve; and
Figure 5 is a schematic view of a method for feeding the young of domesticated animals with a feeding device arrangement.

### Detailed description

The young of domesticated animals require after birth initially not only water but also a more nutritious liquid, typically milk. This liquid can be offered to the young, for instance calves, either as free-choice feeding or by controlling the amount of liquid either manually or automatically. Typically the amount of more nutritious liquid required by the young, for instance calves, initially increases, then remains the same and finally decreases as the animal is weaned off this more nutritious liquid and slowly moves to the diet of a fully grown animal. In free-choice feeding, the animal often drinks more than is necessary. Manual control is arduous and difficult and, on the other hand, automatic feeders are expensive to use in smaller farms.

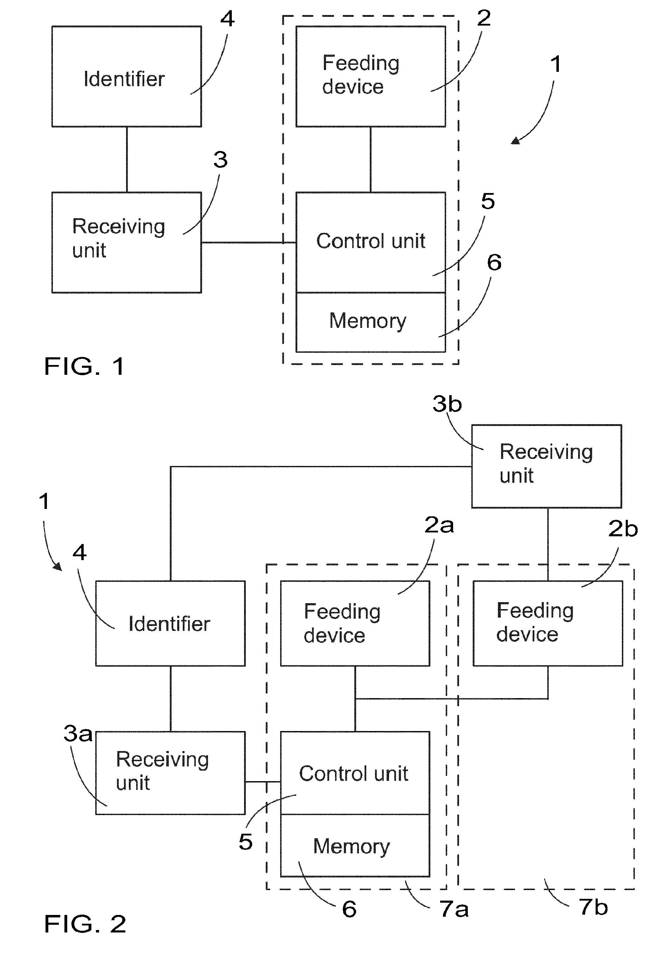

The present feeding device arrangement is intended for feeding the young of domesticated animals. Figure 1 is a schematic view of a feeding device arrangement 1. This feeding device arrangement may comprise at least one feeding device 2, a receiving unit 3 arranged in the vicinity of the feeding device for receiving identification data from the identifiers 4 of the animals to be fed, and a control unit 5. For the sake of clarity, Figure 1 only shows one identifier, but naturally there are usually more identifiers than this, typically one for each animal to be fed, or in this case more precisely for each animal that drinks. An advantage of this type of solution is that it does not comprise a computer display or a complex user interface, but the arrangement may be taken into use simply by switching power to the feeding device(s). Thus, the use of the arrangement is extremely simple, and the user, typically the animal keeper, essentially does not need to learn anything, and the arrangement can be formed of significantly more inexpensive components than the known automatic feeders. This way, the feeding device arrangement may provide a work-sparing, liquid (such as milk) optimizing and cost-efficient solution even for small and medium-sized farms.

The receiving unit 3 may be arranged to receive the identification information of an animal coming to drink from the feeding device and to transmit this information to the control unit 5. The receiving unit 3 is preferably a wireless receiver that is capable of receiving the identification information transmitted by the identifier 4 arranged on the animal either fixedly or on a collar or a corresponding equipment of the animal. The receiving unit 3 may, depending on the embodiment, transmit this information to the control unit either over wire or wirelessly. The control unit 5 may, in turn, be arranged to compare the identification information received in the control unit with identification information and feeding curve information stored in the memory 6 of the control unit. The control unit 5 may thus be arranged to fetch from the memory 6 of the control unit, which may be an internal or external memory of the control unit, the identification information of animals stored into the memory, predetermined feeding curves 10 and/or feeding curve information indicating the location of the animal associated with the identification information, such as the monitoring time of the feeding curve and the amount of liquid consumed by the animal. If an animal arrived at the feeding device, carrying an identified identifier and corresponding to the associated identification information has already been identified in the same arrangement, the feeding curve information of the animal may be stored in the memory of the control unit 6, and they may be fetched from the memory in response to the reception of the identification information in the receiving unit 3 arranged in the vicinity of the feeding device.

The control unit 5 may be arranged to add a new animal, which is identified at the feeding device 2 but has not yet been stored in the memory 6 of the control unit, i.e. an animal that has not earlier visited any feeding device of the feeding device arrangement, to the memory 6 of the control unit in response to receiving the identification information in the receiving unit 3 and in the control unit 5. Preferably, feeding curve information is generated at the same time for the new animal by storing the animal to the beginning of a predetermined feeding curve 10 in response to receiving the identification information in the control unit 5. In an embodiment, a new animal that has not been stored into the memory earlier can be added to the beginning of a predetermined feeding curve automatically. The animal may then be equipped with an identifier 4 or the like or some other identification means attachable to it.

The control unit 5 may also be arranged to control the amount of liquid offered to the animal on the basis of a predetermined feeding curve 10 and possible earlier feeding curve information and to transmit the control information to the feeding device. The control unit 5 may then define an optimum feeding amount or rate, for instance, for the animal on the basis of the feeding curve information stored in the memory 6. This control information can then be transmitted to the feeding device 2. The feeding device 2 preferably rations the amount of liquid provided for the animal on the basis of this control information.

Further, the feeding device 2 and control unit 5 may be arranged to define the amount of liquid consumed by the animal and to store it in the feeding curve information. This way, the amount of liquid consumed by the animal at each time can be determined on the basis of the information gathered from the feeding device 2, for instance on the basis of the predetermined or otherwise known feeding rate and time or the rate and time defined by the control unit 5, and this information can be updated to the feeding curve information associated with the identification information fetched from the memory of the control unit, and this updated feeding curve information can further be stored in the memory 6 of the control unit, for instance.

The control unit 5 may also be arranged to delete the identification information from the control unit memory 6, when a predetermined time has elapsed from the latest reception of said identification information in the receiving units 3 of the feeding devices 2 belonging to the arrangement. The identification information and the related feeding curve information can, thus, be deleted from the memory 6 of the control unit automatically without input or the like from the user of the arrangement, when the animal has not been identified by the feeding devices 2 of the feeding device arrangement 1 for a predetermined time. Typically, this means that the weaning of the young, such as calves, has been successful and the calf has moved on to a diet resembling to that of a fully grown animal at least in terms of drinkable liquids. The predetermined time may preferably be 2 to 10 days, for instance, most preferably 2 to 7 days, that is, at least 2 days and at most 7 days. On one hand, this solution provides the advantage that the user need not do anything, and, on the other hand, that the same identification information and in some embodiments also the identifier 4 can be taken into use for a new animal, when the predetermined waiting period has elapsed.

Figure 2 shows a second feeding device arrangement. This type of arrangement may comprise one master feeding device unit 7a that comprises a feeding device 2a and control unit 5, and at least one slave feeding device unit 7b that comprises a feeding device 2b. The identification information of the animal as well as the amount of liquid consumed by the animal can then be identified with one of the feeding devices 2a, 2b, and the information can be transmitted to the control unit 5 of the master feeding device unit 7a. The information can then be processed in said manner in the control unit 5 of the master feeding device unit 7a, and the control information controlling the amount of liquid to be offered to the animal can be transmitted to the feeding device 2a, 2b that has identified the animal. In different embodiments, the feeding device arrangement may comprise a master feeding device unit 7a and two slave feeding device units 7b or several slave feeding device units 7b. This way, the number of feeding devices 2a, 2b can be optimized to suit the number of animals being fed. This type of arrangement can also be defined in such a manner that each animal can use any feeding device 2a, 2b without disturbing the feeding curve information. Typically, a receiving unit 3a, 3b is also arranged to each feeding device unit 7a, 7b.

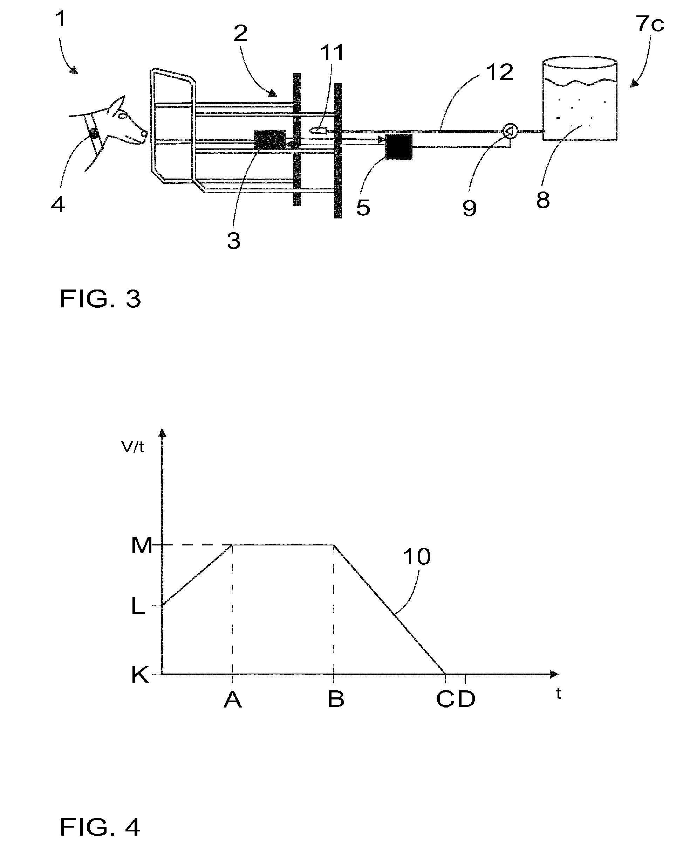

Figure 3 is a schematic view of a feeding device arrangement 1. The arrangement shows one way of arranging an identifier 4 to an animal and a receiving unit 3 to the feeding device. It is apparent to a person skilled in the art that the receiving unit can also be arranged to the feeding device or its vicinity in some other manner. A few alternatives to arranging the identifier 4 to an animal are described elsewhere in this specification. The figure also shows schematically a feeding device unit 7c comprising a control unit 5, drinking liquid container 8 and dosing pump 9. In the embodiment shown in the figure, the feeding device 2 may comprise in addition to the drinking liquid container 8 and dosing pump 9 also other necessary structures, such as a drinking dose feeder 11, tubes, pipes or other suitable channels 12 for conveying liquid. In this arrangement, the liquid is stored in a liquid container 8 known per se, from which it is dosed for the animal in the feeding device with the dosing pump 9, an embodiment of which is described in more detail elsewhere in this specification. The control unit 5 may control the dosing of liquid by the dosing pump 9.

Figure 4 is a schematic view of a predetermined feeding curve 10. This type of feeding curve 10 may be saved in the control unit 5, typically in the memory 6 of the control unit. Especially preferably this type of feeding curve 10 is saved in the memory 6 of the control unit in advance so that the user of the device need not configure the feeding device in any way, and the feeding device arrangement 1 can be taken into use immediately. The feeding curve 10 depicts the optimum amount of liquid (V/t) consumed by the animal in relation to time (t), typically the amount of liquid the animal consumes in a day each day. The feeding device arrangement 1 may monitor the daily amount of liquid consumed by the animal and the feeding curve 10, and control how much liquid is offered to the animal on the basis thereof. For young animals, such as calves, the consumed optimum amount of liquid may first increase and then remain the same, for example. At the end of the feeding curve, the animals may be weaned by reducing the daily amount of this liquid provided for the animal. The feeding curve 10 shown in Figure 4 may depict the consumed optimum amount of liquid of such a young animal, for instance.

In the embodiment of Figure 4, each animal can, thus, be fed according to this type of predetermined feeding curve 10. The feeding of the animal can be started with a starting dose L that depicts a certain amount of liquid per day. The daily amount of liquid increases slowly to the maximum dose M that is continued between time instants A and B. After time instant B, the daily amount of liquid offered to the animal is decreased until at time instant C, the feeding consists of the minimum dose K, when the offering of liquid to the animal is stopped altogether, that is, the minimum dose K is 0 litres per day. Even though in Figure 4, the changing of the amounts of liquid between the daily amounts of liquid L and M and M and K are shown linearly, the changing may in different embodiments also take place in some other manner, such as in an accelerating or decelerating manner.

At time instant D, the animal can be taken off the curve. In other words, the time between the time instants C and D may be the above-mentioned predetermined time, after which the identification information of the animal may be deleted from the device. The animal is thus no longer fed said liquid between time instants C and D or the animal is offered the minimum dose K.

In an embodiment, when the animal has been weaned and has not come to the feeding device within a predetermined time, the identification information of the animal may be deleted from the device and freed for use for the next animal preferably automatically. Depending on the species, the development phase, in a young or fully grown animal, for instance, and the controlled nourishment, the curves may be different.

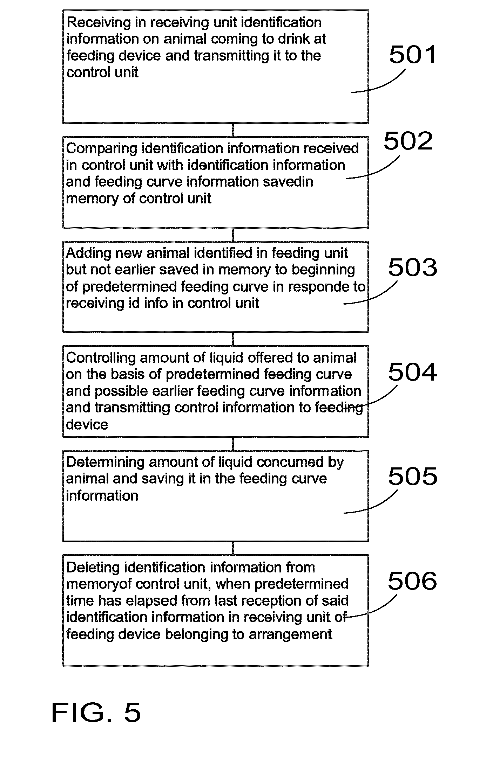

Figure 5 shows schematically a method for feeding the young of domesticated animals with a feeding device arrangement, which feeding device arrangement 1 may correspond to any arrangement described in this specification and the related figures. Correspondingly, one of the arrangements described in this specification and the related figures may be arranged to implement at least part of the steps of the described method, most preferably all of the steps described in the independent claim. The method may comprise at least the following steps. The identification information of an animal coming to drink from the feeding device 2, 2a, 2b can be received 501 in the receiving unit 3, 3a, 3b of the feeding device and transmitted to the control unit 5. The identification information received in the control unit can be compared 502 with identification information and feeding curve information stored in the memory 6 of the control unit. A new animal identified in the feeding device that has not been stored in the memory of the control unit can be added 503 to the beginning of a predetermined feeding curve 10 in response to receiving the identification information in the control unit. The amount of liquid offered to the animal can be controlled 504 on the basis of a predetermined feeding curve and possible earlier feeding curve information, and the control information can be transmitted to the feeding device. The amount of liquid consumed by the animal can be defined 505 and stored in the feeding curve information. The identification information can be deleted 506 from the memory of the control unit, when a predetermined time has elapsed from the latest reception of said identification information in the receiving units of the feeding devices belonging to the arrangement. In other words, the animal associated with the identification information has then not visited the feeding device during the defined time and, if this is a young animal, for instance, it can then be considered weaned, for example. In an embodiment, the predetermined time may be 2 to 10 days, for instance, especially advantageously 2 to 7 days.

In an embodiment, the identification information of an animal is identified wirelessly. The advantage of this solution is that the animal may move to the feeding device and away from it independently without the user needing to record it. The animal can also be added to the beginning of the feeding curve automatically without user input. In other words, no action is required from the user in this. Preferably the identifier of the animal may be an RFID, for example.

The identifier, preferably an identifier that permits a wireless identification of an animal, can depending on the embodiment be arranged in the collar, ear or stomach of the animal, for instance.

In an embodiment, the method can be used in connection with an arrangement that comprises one master feeding device with a control unit and at least one slave feeding device. The identification information of the animal and also the amount of liquid consumed by the animal can be identified with one of these feeding devices; said information can be transmitted to the control unit of the master feeding device, the information can be processed in any of the above-mentioned manners in the control unit of the master feeding device, and the control information controlling the amount of liquid to be offered to the animal can be transmitted to the feeding device, where the animal has been identified. Otherwise, the method can preferably be as that shown in Figure 5.

In some embodiments, the amount of liquid consumed by the animal can be determined on the basis of the flow rate of the liquid and the elapsed time. For instance, in an embodiment, the dosing of feed may be implemented by a dosing pump. Depending on the embodiment, the output of the pump, i.e. flow rate, may be known or predefined, 0.4 l/min for example, or the actual flow rate may be definable. In embodiments of this type, measuring the amount may be based on measuring time, and the consumed amount of liquid may be defined on the basis of the flow rate, if necessary as a function of time, and the elapsed time.

In an embodiment, the dosing of drink may be implemented with a through-flow valve. Measuring the amount may then be based on the known consumption rate of animals having different age and/or species. Studies have shown that a 7-day old calf drinks about 0.3 litres per minute, whereas an older, 45-day old calf drinks about 0.5 litres per minute. This can be taken into account by linearizing the consumption rate on the feeding curve 10 or by utilizing the consumption rate and the elapsed time in the definition of the consumed amount of liquid.

In an embodiment, the feeding device may comprise a sour milk container and dosing pump.

It will be apparent to a person skilled in the art that as technology advances, the basic idea of the invention may be implemented in many different ways. The invention and its embodiments are thus not restricted to the examples described above but may vary within the scope of the claims.

## Claims

1. A method for feeding the young of domesticated animals with a feeding device arrangement (1) that comprises at least one feeding device (2, 2a, 2b), a receiving unit (3, 3a, 3b) arranged in the vicinity of the feeding device for receiving identification information from the identifiers (4) of the animals, and a control unit (5), the method comprising:
receiving (501) the identification information of an animal coming to drink from a feeding device (2) in the receiving unit (3, 3a, 3b) and transmitting the information to the control unit (5),
comparing (502) the identification information received in the control unit (5) with identification information and feeding curve information stored in a memory (6) of the control unit,
controlling (504) the amount of liquid offered to the animal on the basis of a predetermined feeding curve (10) and possible earlier feeding curve information, and transmitting the control information to the feeding device (2, 2a, 2b), and
determining (505) the amount of liquid consumed by the animal and storing it in the feeding curve information, **characterised by** the method further comprising:
adding (503) a new animal identified in the feeding device (2, 2a, 2b) which has not been stored in the memory (6) of the control unit to the beginning of a predetermined feeding curve (10) in response to receiving the identification information in the control unit (5), and
removing (506) the identification information from the memory (6) of the control unit, when a predetermined time has elapsed from the last reception of the identification information in the receiving units (3, 3a, 3b) of the feeding devices (2, 2a, 2b) belonging to the arrangement, wherein the predetermined time is 2 to 10 days.

2. A method as claimed in claim 1, comprising identifying the identification information of an animal wirelessly, and adding a new animal that has not been earlier stored in the memory (6) automatically without user input to the beginning of a predetermined feeding curve (10).

3. A method as claimed in claim 2, wherein the identifier (4) of the animal is an RFID.

4. A method as claimed in any one of claims 1 to 3, wherein the arrangement comprises one master feeding device unit (7a) that comprises a feeding device (2a) and control unit (5), and at least one feeding device (2b) of a slave feeding device unit (7b), and the identification information of the animal and also the amount of liquid consumed by the animal are identified with one of these feeding devices (2a, 2b), said information is transmitted to the control unit (5) the master feeding device unit (7a), processed in said manner in the control unit (5) of the master feeding device unit (7a), and control information controlling the amount of liquid to be offered to the animal to the feeding device (2a, 2b), where the animal has been identified.

5. A method as claimed in any one of claims 1 to 4, wherein said predetermined time is at least 2 days and at most 7 days.

6. A method as claimed in any one of claims 1 to 5, wherein the amount of liquid consumed by the animal is determined on the basis of the flow rate of the liquid and the elapsed time.

7. A method as claimed in any one of claims 1 to 6, wherein the feeding device comprises a sour milk container (8) and dosing pump (9).

8. A feeding device arrangement (1) for feeding the young of domesticated animals, the arrangement comprising at least one feeding device (2, 2a, 2b), a receiving unit (3, 3a, 3b) arranged in the vicinity of the feeding device for receiving identification information from the identifiers (4) of animals to be fed, and a control unit, and wherein
the receiving unit (3, 3a, 3b) is arranged to receive the identification information of an animal that has arrived to drink from the feeding device (2, 2a, 2b) and to transmit it to the control unit (5),
The control unit (5) is arranged to compare the identification information received in the control unit with identification information and feeding curve information stored in the memory (6) of the control unit,
The control unit (5) is arranged to control the amount of liquid offered to the animal on the basis of a predetermined feeding curve (10) and possible earlier feeding curve information, and to transmit the control information to the feeding device (2, 2a, 2b), and
the feeding device (2, 2a, 2b) and control unit (5) are arranged to determine the amount of liquid consumed by the animal and to store it into the feeding curve information, **characterised in that**
the control unit (5) is arranged to add a new animal that has been identified at the feeding device and has not been earlier stored in the memory (6) to the beginning of a predetermined feeding curve (10) in response to receiving the identification information in the control unit (5), and
The control unit (5) is arranged to delete the identification information from the control unit memory (6), when a predetermined time has elapsed from the latest reception of said identification information in the receiving units of the feeding devices (2, 2a, 2b) belonging to the arrangement, the predetermined time being 2 to 10 days.

9. An arrangement as claimed in claim 8, **characterised in that** the control unit (5) is arranged to add an animal that has not earlier been saved in the memory (6) automatically without user input to the beginning of a predetermined feeding curve.

10. An arrangement as claimed in claim 8 or 9, **characterised in that** it comprises one master feeding device unit (7a) that comprises a feeding device (2a) and control unit (5), and at least one feeding device (2b) of a slave feeding device unit (7b), and the identification information of the animal and also the amount of liquid consumed by the animal are identified with one of these feeding devices (2a, 2b), said information is transmitted to the control unit (5) of the master feeding device unit (7a), processed in said manner in the control unit (5) of the master feeding device unit (7a), and control information controlling the amount of liquid to be offered to the animal to the feeding device (2a, 2b), where the animal has been identified.
